# EUROPEAN PATENT SPECIFICATION

(11) **EP 3 123 273 B1**
(45) Date of publication and mention of the grant of the patent: **30.12.2020**
(21) Application number: 15767848.3
(22) Date of filing: 22.03.2015
(51) Int. Cl.: G06F 1/28, G06F 21/55, G06F 21/81

(54) **SYSTEM AND METHOD FOR DETECTING ACTIVITIES WITHIN A COMPUTERIZED DEVICE BASED ON MONITORING OF ITS POWER CONSUMPTION**
SYSTEM UND VERFAHREN ZUR ERKENNUNG VON AKTIVITÄTEN IN EINER COMPUTERISIERTEN VORRICHTUNG BASIEREND AUF DER ÜBERWACHUNG IHRES ENERGIEVERBRAUCHS
SYSTÈME ET PROCÉDÉ DE DÉTECTION D'ACTIVITÉS AU SEIN D'UN DISPOSITIF INFORMATIQUE SUR LA BASE D'UNE SURVEILLANCE DE SA CONSOMMATION ÉNERGÉTIQUE

(30) Priority: 23.03.2014 US 201461969179 P
(43) Date of publication of application: 01.02.2017
(73) Proprietor: B.G. Negev Technologies & Applications Ltd. at Ben-Gurion University, 8410501 Beer-Sheva (IL)
(72) Inventor: GURI, Mordechai, 7170656 Modi'in (IL); ELOVICI, Yuval, D.N. Lachish 7986400 (IL)
(74) Representative: Cabinet Beau de Loménie
(86) International application number: PCT/IL2015/050297
(87) International publication number: WO 2015/145425

(56) References cited:
- EP-B1- 2 260 563
- WO-A1-2012/087685
- US-A1- 2007 182 421
- US-A1- 2008 276 111
- US-A1- 2008 276 111
- US-A1- 2012 158 201
- US-A1- 2012 158 201
- US-A1- 2012 180 126
- US-B2- 8 332 945

## Description

### Field of Invention

The field of the invention relates in general to methods and systems for securing computerized environments and devices. More specifically, the invention relates to a method and system for securing a computerized device by means of monitoring of its electrical power consumption.

### Background of the Invention

Computerized devices, either stationary or mobile, are valuable targets for skillful, sophisticated, and motivated offenders. Many protection techniques have been developed to protect computerized devices from malicious code. In this respect, the fast development of smart phones and tablets has exposed the users to still additional aspects of security issues compared to stationary devices. While intrusions into stationary devices generally provide data *per se,* smartphones include many built in sensors that can be turned on silently by a malicious code, thereby exposing valuable data and private information to the attacker.

Modern smartphones host various gadgets and sensors, such as GPS, Wi-Fi, voice, camera, accelerometers, etc. The normal activation of such components (gadgets and sensors) normally requires manual input from the user, typically by touching the screen. However, an unauthorized intrusion which introduces a malicious code may activate one or more of said sensitive component without the user's consent. This serious vulnerability is exploited by remote hostile agents to gather sensitive information through the subverted mobile phone. For this purpose, and in similarity to stationary devices, a variety of security software has been developed and is widely used for protecting mobile devices. In this respect, it should be noted that the security model of most mobile phone operating systems discourages some typical monitoring solutions that are available for personal computers and stationary devices.

One alternative solution for protecting a mobile phone from a malicious code is disclosed, for example, by Zefferer et. al. Zefferer proves that a malware running within the mobile phone has a unique characteristic "signature" (although he does not specifically uses the term "signature"), therefore various malwares can be detected by means of monitoring the power consumption from the battery. More specifically, Zefferer suggests monitoring of the power consumption by means of dedicated software to detect anomalies that may hint to the presence of malicious code. This solution is based on said assumption that a variety of malicious activities within the protected environment have characteristic and detectable behaviors, respectively, in terms of power consumption. More specifically, malicious activities have their own "signature". This solution in fact suggests performing a continuous monitoring of the power consumption by means of dedicated software, and detection of such "signatures". In some additional cases, and in a manner common in the field of computer security, this detection technique may be used in association with other protection techniques. However, according to all of the prior art publications, said monitoring of the device's power consumption, is performed by a program that runs within the same computerized environment that it intends to protect.

The term "environment", or "computerized environment" relates herein to a range of hardware and software, that are in turn accessible either physically (for example, via a USB connector) or wirelessly (for example, via a WiFi network). Typically an "environment" is a close computerized range to which access is allowed only to authorized persons or programs, however, a "closed" environment may be breached by unauthorized activities, either via said physical connection or wirelessly.

As noted, a variety of software tools have been developed to protect a computerized environment (i.e., either stationary computers or mobile devices), from malicious programs and activities. All of security software tools, no matter what measures they apply, have one characteristic in common: They all run a protection code on the device (stationary or mobile) or network of devices that they intend to protect, i.e., they run within the same environment that they intend to protect. For example, the anti-virus tool executes a program that runs within the device to scan the one or more hard discs and the device memory. The firewall, in turn, runs a program within the internal computerized environment that masks the structure of the environment from the world outside of this environment.

This manner of operation, however, has a significant drawback. The fact that a malicious code has successfully injected to within the protected environment is in itself a proof for the vulnerability of this environment. As a result of this vulnerability, and by the same manner that the malicious code was successfully injected to within the protected environment, a same or another code may, for example, manipulate the protecting code (for example, anti-virus, or any other protecting software) to perform one of the following: (i) to stop operation; (ii) to ignore the existence of the malicious code within the protected environment; or (iii) to manipulate the code such that no report will be issued to the user with respect to the detection of the malicious code. Following this manipulation, the malicious code in fact can operate freely within the protected environment.

US 2008/027611 discloses an information processing electronic device capable of detecting undesired software by monitoring electric power consumption patterns. A sensor detects an amount of electric power or current consumed by the electronic device, and a threshold detector compares the detected electric power or current to a threshold value, to indicate that undesired software is present when the threshold is exceeded. The threshold detector is connected to a microprocessor which handles computing functions of the electronic device. WO2012/087685 discloses signature independent system bahaviour-based malware detection.

It is therefore an object of the present invention to provide a protecting code which is fully isolated and protected from any external manipulation.

It is a more specific object of the invention to provide said protecting code which detects and alerts of unauthorized events, by monitoring the power consumption of the device.

It is still another object of the invention to provide a method and system which can be applied to both stationary devices that are fed from a power supply and to mobile devices that are fed from a battery.

Other objects and advantages of the invention will become apparent as the description proceeds.

### Summary of the Invention

The invention relates to a system for protecting a computerized device from a malicious activity resulting from a malicious code, which comprises: (a) a first DC supply monitoring unit which is located within a separate computerized environment, namely an environment which is totally separated and isolated both physically and in terms of connectivity from the hardware and software of the computerized environment of the device; (b) a memory database for storing one or more signatures of known malicious events, each of said signatures describes the temporal effect of a malicious event, respectively, on the power consumption from the DC supply of the device; and (c) a microprocessor within said DC supply monitoring unit for continuously monitoring the power consumption from said DC supply of the device, comparing temporal characteristics of the power consumption with said malicious events signatures in said database, and alerting upon detection of a match, wherein said DC supply monitoring unit is at most physically connected to the DC supply of the device.

Preferably, said first DC supply monitoring unit is positioned on a separate printed circuit, and wherein said microprocessor bases its monitoring on sampling of the current consumption from said DC supply.

Preferably, said computerized device is a mobile device, and wherein said DC supply is the battery of the device.

Preferably, said computerized device is a stationary device, and wherein said DC supply is the power supply of the device.

Preferably, said malicious events are combined from the occurrence of one or more of individual incidents.

Preferably, said alerting is provided by visual, audible, or a combination thereof of alert means that are positioned within said separated and isolated first DC supply monitoring unit.
said visual means is a light emitting diode, and said visual means is a buzzer. Preferably, the form and manner of the alert may be selected from several levels of alerts.

Preferably, the monitoring of the power consumption from the DC supply is performed by means of sampling of current consumption.

Preferably, said first DC supply monitoring unit is positioned on a separate printed board, and wherein said separate printed board having a port for communicating input and output data to and from the first DC supply monitoring unit.

Preferably, said port is used to update said database of one or more signatures.

Preferably, said memory also stores a first events log.

Preferably, the system further comprises: (a) a second DC supply monitoring program which runs within said computerized environment of the device simultaneously with said monitoring microprocessor that runs within said separate environment, and which forms a second events log; and (b) an external entity which extracts said first events log from the separate computerized environment and said second events log from the computerized environment of the device, and which compares said two logs to possibly detect mismatch of detected events, that hints to a malicious manipulation of said second DC supply monitoring unit.

### Brief description of the Drawings

In the drawings:
- Fig. 1 illustrates in a simplified block diagram form a prior art security system for determining events based on power consumption;
- Fig. 2 shows in a simplified block diagram form a protecting system for protecting a computerized device (either mobile device or a stationary device), according to an embodiment of the present invention;
- Fig. 3 illustrates the interconnections between a DC supply unit and two separate computerized environments, according to an embodiment of the invention; and
- Fig. 4 is a graph showing the *f₄* vs. *f₀* of several events, as detected in an experiment, together with their associated indices.

### Detailed Description of Preferred Embodiments of the Invention

As noted above, all the security software that intends to protect a computerized environment from a malicious code runs some software from within the protected environment itself. This is also the case with Zefferer et. al (mentioned above) which suggests detection of malicious code by means of monitoring the power consumption of the mobile device by means of dedicated software. As also noted, this approach, i.e., the running of a security program from within the protected environment, has an inherent drawback, as the malicious code which has been successfully injected into the system may manipulate the security program itself, to either: (i) stop its operation; (ii) cause it to ignore the existence of the malicious code within the protected environment; or (iii) manipulate the security program such that no report will be issued to the user with respect to the detection of the malicious code.

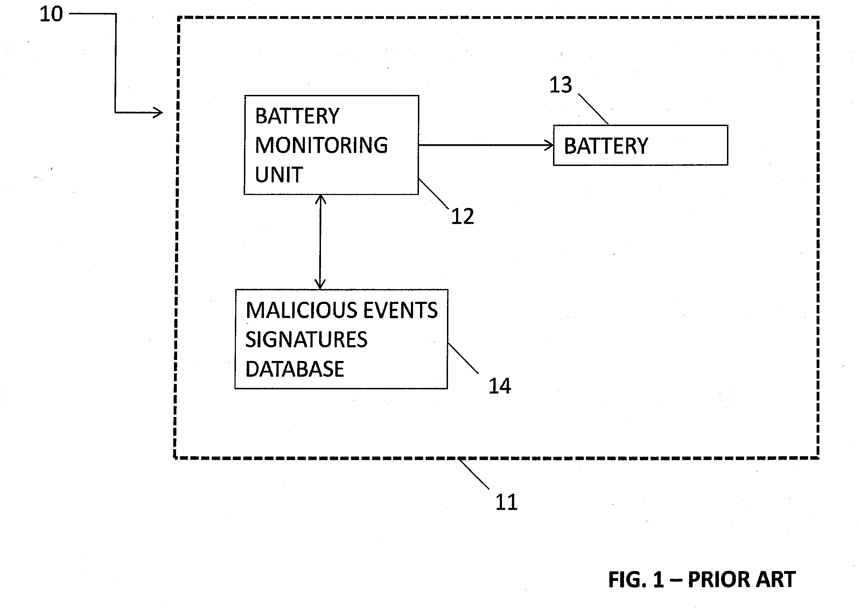

Fig. 1 illustrates in a simplified block diagram form the manner by which the prior art security system 10, such as a hypothetical system based on Zefferer operates. The protecting system 10 based on Zefferer typically operates by means of a running application to protect a computerized environment of 11 of a mobile device. Naturally, the running application operates from within the protected environment 11, i.e., by means of the microprocessor of the mobile device and from the same memory on which the operating system and all the other programs and applications run on the device. Therefore, and as noted above, this protecting system 10, having the form of a program, is susceptible to malicious manipulations. The system 10 comprises a software-based battery monitoring unit 12 which monitors the power consumption from battery 13 to detect battery consumption events. A battery consumption event may be considered as any change with respect to the power consumption from the battery 13. Upon detection of any of such event, the battery monitoring unit records the event characteristics, and compares these characteristics against each of the malicious code signatures that are stored within the malicious code signatures database 14. Upon finding of any match between the recorded event and a signature within the database, the monitoring unit issues an alert.

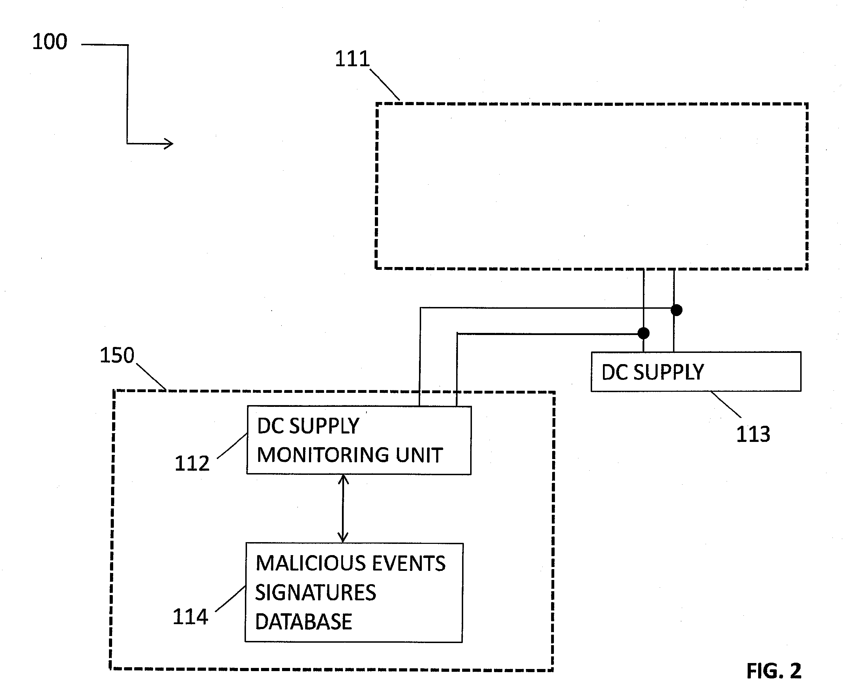

Fig. 2 shows in a simplified block diagram form a protecting system 100 for protecting a computerized device (either mobile device or a stationary device), according to an embodiment of the present invention. The environment 111 is the conventional computerized environment (hardware and software) of the device. The DC supply 113 may be either a battery of the mobile device or a DC power supply of a stationary device and it feeds, as is conventional, DC voltage to the hardware portion of the environment 111. The DC supply monitoring unit 112 and the malicious events signatures database 114 are similar in their nature to the battery monitoring unit 12 and malicious events signatures 14 of Fig. 1, respectively, however they operate on a computerized environment 150 which is totally isolated from the computerized environment 111 of the device. More specifically, the battery monitoring unit 112 and the malicious events signatures database 114 are operated by a separate microprocessor (not shown) which is positioned on an individual printed circuit which is totally separated and isolated both physically and in terms of connectivity from both the hardware and software of the computerized environment 111 of the device. The DC supply 113 is shown external of the computerized environments 111 and 150, as the battery only feeds in parallel these two environments with DC voltage. However, there is no way whatsoever for interaction between these two environments 111 and 150, as they are totally separated and isolated one from the other both in terms of hardware physical separation and in terms of software separation.

According to the present invention, the DC supply monitoring unit 112 which is totally separated and isolated from the computerized environment of the device also comprises alert means (not shown). Upon detection of a malicious event, the alert may be provided to the user, visually, audibly or both. The visual alert may be provided to the user, for example, by means of a light emitting diode, and the audible alert may be provided by means of a buzzer. In any case, all the means for providing said alerts are located on the printed circuit which is totally separated and isolated from the computerized environment of the device. Furthermore, several levels of alert may be provided, and these levels may be reflected either visually of audibly.

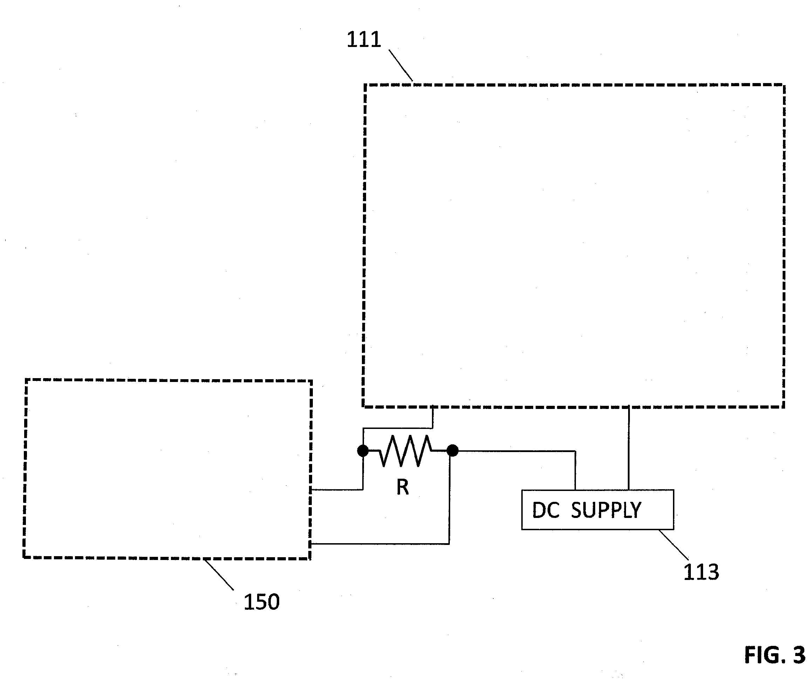

Fig. 3 illustrates the interconnections between the DC supply unit 112 and the two separate environments 111 and 150. In principle the power consumption of the computerized environment 111 of the device can be analyzed by measuring the voltage and current of the device DC supply 113. In practice, the voltage of the DC supply is almost constant, so only the current provides significant data. Standard sampling equipment based on ADC (Analog to Digital Converter) can sample only voltage, so in order to measure the current a small series resistor R is connected to the DC supply output, ahead of the power socket, as shown in Fig. 3. In this arrangement, the sampled voltage is proportional to the current. There are two ways for the resistor R to be connected: to the positive electrode of the DC supply or to the negative (ground) electrode. If the resistor R is connected to the positive electrode, a differential amplifier for ADC (Analog to Digital Converter) is required. On the other hand if the resistor is connected to the negative electrode of the DC supply, a single end connection can do the work. The first connection is preferred due to its smaller amount of interferences. The sampling rate has to be at least two times larger than the maximum frequency of the sampled data (based on the Nyquist rate).

### Example 1

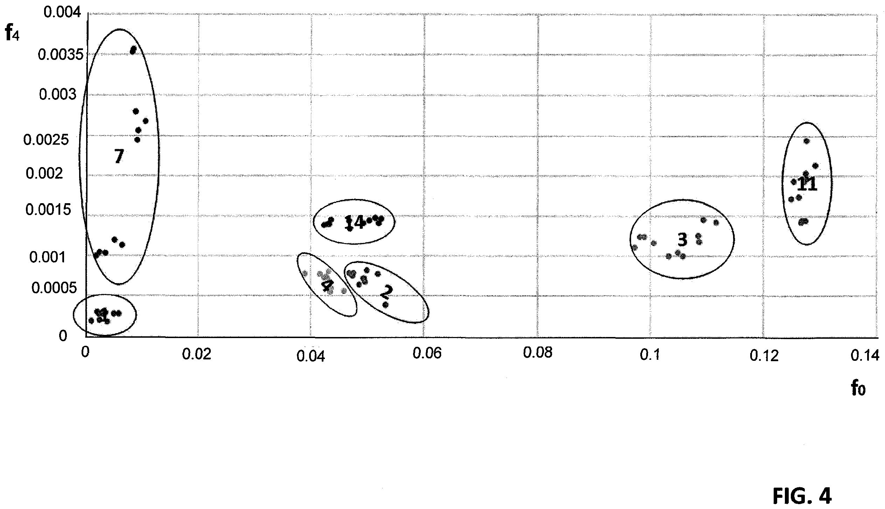

A setup according to the present invention was arranged to check a mobile phone for various activities. The measurement setup was based on a National Instruments™ ADC USB card, with differential analog inputs, with voltage range of ±10 Volt, 1.25MHz sample rate, and 16 bit ADC resolution. The card was connected to a PC through a USB connection, and data acquisition was performed using a Labview™ program. The sampled data was represented in the frequency domain as shown in Fig. 4. Most of the sampled signals were found to be pulses with a steep rise and a steep decline at the start and end of the pulse, respectively, and a nearly constant segment in between. The fast changes in the time domain were represented by high frequencies and the constant segment by low frequencies in the frequency domain. It has been found that the frequency domain provides better separation between signals relating to different activities. The transformation from time to frequency domain was performed using FFT (Fast Fourier Transform) which separated the sampled signals to plurality of discrete frequencies in the frequency domain. Each discrete frequency is referred herein as "feature". The number of the features by which the signals were examined varied depending on the sampling frequency and the time window selected. Different activities such as touch, Wi-Fi or GPS etc. were observed to have distinctive patterns over different sizes of time windows. The average window size for GPS and Wi-Fi was 4 seconds, and the window size for touch was between 100 to 300 mSec.

Various activities were separately recorded, and then concatenated. The various activities were represented by a single multi-valued label. The resulting dataset was visualized on 2 and 3 dimensions (i.e., frequencies), and revealed a pretty good separation between signals relating to the various activities. In addition, the dataset was classified, using J48 and LogitBoost (Machine Learning techniques well known in the art), and the resulting accuracy was found to be around 97%. Feature selection, using info-gain and gain-ratio, allowed a reduction of the number of features from 50 to 5, without a significant loss of accuracy. The following list provides index for the tested events:

| # | Tested activities |
|---|---|
| 1 | Screen OFF |
| 2 | Screen ON until shutdown |
| 3 | Touching the screen |
| 4 | GPS ON, screen OFF |
| 7 | WiFi ON |
| 11 | GPS ON, screen ON |
| 14 | GPS ON, WiFi ON |

Fig. 4 is a graph showing the *f₄* vs. *f₀* of several events, as detected in the experiment, together with their associated indices. The graph clearly shows that the events are distinguishable. As a result of this experiment, the distinguishing between these events in terms of power consumption enables forming of "events signatures", wherein each signature is a combination of the occurrence of one or more incidents (for example, the event no. 11 "GPS ON, Screen ON" comprises of two incidents). The results show a promising potential of the invention concept.

According to the present invention, the DC supply monitoring unit of the invention, which is totally separated and isolated from the computerized environment of the device, also comprises alert means. Upon detection of an event, an alert may be provided to the user, visually, audibly or both. The visual alert may be provided to the user, for example, by means of a light emitting diode, and the audible alert may be provided by means of a buzzer. In any case, all the means for providing said alerts are located on the printed circuit which is totally separated and isolated from the computerized environment of the device. Upon receipt of the alert, the user may decide how to relate to the alert, and whether to take an action.

Furthermore, the invention is applicable to detect various types of events, either malicious or not, and consequently the term "malicious", wherever used herein, should be viewed to relate to both of said cases.

As noted above, the computerized environment 150 of the present invention (which typically comprises a separate microprocessor and memory) is totally isolated from the computerized environment 111 of the monitored device. Preferably, the system of the invention is positioned on a separate printed board, which has no connection, either wire connection or wireless, with the computerized environment 111 of the device. The printed circuit of the invention, however, preferably has an input output port, for example, a USB, RS232, etc. port for inputting and outputting data between elements on the printed circuit and the "external world". This port may be used, for example, to update the malicious events signatures database 114 with new signatures.

In still another aspect, the invention may be used in conjunction with a prior art application for detecting malicious events, i.e., an application which detects such events by monitoring power consumption from the battery of power supply, and which runs within the computerized environment 111 of the device. According to this aspect of the invention, each of said environments creates its own log events, and saves it within its own environment (111 or 150), respectively. Once in a while, and offline (once in a week, once in a month, etc.), both of the saved logs may be downloaded and compared by means of a program which is external to both of said environments 111 and 150. If, for example, the comparison between the two events logs reveals many more events are detected by the external monitoring unit of the invention, but are missing from the internal prior art events log running within the computerized environment 111 of the device, this situation may hint that said monitoring program that runs within environment 111 has been maliciously manipulated to hide (or not to detect) malicious events. While some embodiments of the invention have been described by way of illustration, it will be apparent that the invention can be carried into practice with many modifications, variations and adaptations, and with the use of numerous equivalents or alternative solutions that are within the scope of persons skilled in the art, without departing from the scope of the invention or exceeding the scope of the claims.

## Claims

1. System (100) for protecting a computerized device from a malicious activity resulting from a malicious code, comprising:
a. a computerized environment (111) of said computerized device having hardware and software which is accessible to a data network;
b. a separate computerized environment (150) configured with hardware and software which are totally separated and isolated from the computerized environment of said computerized device in terms of hardware physical separation and in terms of software separation;
c. a DC supply (113) for powering the computerized environment of said computerized device;
d. a microprocessor-operated first DC supply monitoring unit (112) which is located within said separate computerized environment, wherein said first DC supply monitoring unit is physically connected to said DC supply and is configured to monitor power consumption from said DC supply; and
e. a memory database (114) in which are stored one or more signatures of known malicious events, each of said signatures describes the temporal effect of one of said known malicious events on the power consumption from the DC supply of the device,
wherein said first DC supply monitoring unit comprises alert means adapted to generate an alert signal provided to a user upon detection of a match between monitored temporal characteristics of the power consumption from said DC supply and one or more of the malicious event signatures stored in said database.

2. System according to claim 1, wherein said microprocessor is operable to monitor the power consumption by sampling current consumption from said DC supply (113).

3. System according to claim 1, wherein said computerized device is a mobile device, and wherein said DC supply (113) is a battery of the device.

4. System according to claim 1, wherein said computerized device is a stationary device, and wherein said DC supply (113) is the power supply of the stationary device.

5. System according to claim 1, wherein each of the stored signatures is indicative of a combination of the temporal effect relating to one of said known malicious events and of a temporal effect relating to one or more of individual incidents.

6. System according to claim 1, wherein said alert means is selected from visual alert means, audible alert means, or a combination thereof.

7. System according to claim 6, wherein said visual alert means is a light emitting diode, and said audible alert means is a buzzer.

8. System according to claim 6, wherein the form and manner of the alert may be selected from several levels of alerts.

9. System according to claim 1, wherein said first DC supply monitoring unit (112) is positioned on a printed circuit board separate from, and unconnected to, the computerized environment (111) of the computerized device, and wherein said separate printed board has a port for communicating input and output data to and from the first DC supply monitoring unit (112).

10. System according to claim 9, wherein said port is used to update said memory database (114) of one or more signatures.

11. System according to claim 9, wherein said memory database (114) also stores a first event log.

12. System according to claim 11, which further comprises:
a. a second DC supply monitoring unit which runs within said computerized environment (111) of the device simultaneously with said first DC supply monitoring unit (112) that runs within said separate environment (150), and is configured to generate a second event log which is indicative of the monitored temporal characteristics of the power consumption derived from said DC supply; and
b. an external entity which extracts said first event log from the separate computerized environment and said second event log from the computerized environment of the device, and which compares said first and second event logs to detect mismatch of detected malicious events which is reflective of a malicious manipulation of said second DC supply monitoring unit.

13. System according to claim 1, wherein the DC supply (113) is external of, and feeds in parallel with DC voltage, the computerized environment (111) of said computerized device and said separate computerized environment (150).

## Patentansprüche

1. System (100) zum Schutz einer computerisierten Vorrichtung vor einer bösartigen Aktivität, die aus einem bösartigen Code resultiert, umfassend:
a. eine computerisierte Umgebung (111) der computerisierten Vorrichtung, die Hardware und Software aufweist, die für ein Datennetzwerk zugänglich ist,
b. eine separate computerisierte Umgebung (150), die mit Hardware und Software ausgestaltet ist, die hinsichtlich physikalischer Hardware-Trennung und hinsichtlich Software-Trennung vollständig von der computerisierten Umgebung der computerisierten Vorrichtung getrennt und isoliert sind,
c. eine Gleichstromversorgung (113) zum Versorgen der computerisierten Umgebung der computerisierten Vorrichtung mit Energie,
d. eine mikroprozessorbetriebene erste Gleichstromversorgungs-Überwachungseinheit (112), die innerhalb der separaten computerisierten Umgebung angeordnet ist, wobei die erste Gleichstromversorgungs-Überwachungseinheit physikalisch mit der Gleichstromversorgung verbunden und dazu ausgestaltet ist, den Energieverbrauch von der Gleichstromversorgung zu überwachen, und
e. eine Speicherdatenbank (114), in der eine oder mehrere Signaturen von bekannten bösartigen Ereignissen gespeichert sind, wobei jede von den Signaturen die zeitliche Wirkung von einem von den bekannten bösartigen Ereignissen auf den Energieverbrauch von der Gleichstromversorgung der Vorrichtung beschreibt,
wobei die erste Gleichstromversorgungs-Überwachungseinheit Alarmmittel umfasst, die dazu ausgelegt sind, bei der Erkennung einer Übereinstimmung zwischen überwachten zeitlichen Eigenschaften des Energieverbrauchs von der Gleichstromversorgung und einer oder mehreren von den in der Datenbank gespeicherten Signaturen von bösartigen Ereignissen ein Alarmsignal zu erzeugen, das einem Benutzer bereitgestellt wird.

2. System nach Anspruch 1, wobei der Mikroprozessor betriebsfähig ist, um den Energieverbrauch durch Abtasten eines Stromverbrauchs von der Gleichstromversorgung (113) zu überwachen.

3. System nach Anspruch 1, wobei die computerisierte Vorrichtung eine mobile Vorrichtung ist und wobei die Gleichstromversorgung (113) eine Batterie der Vorrichtung ist.

4. System nach Anspruch 1, wobei die computerisierte Vorrichtung eine ortsfeste Vorrichtung ist und wobei die Gleichstromversorgung (113) die Energieversorgung der ortsfesten Vorrichtung ist.

5. System nach Anspruch 1, wobei jede von den gespeicherten Signaturen eine Kombination der zeitlichen Wirkung in Bezug auf eines von den bekannten bösartigen Ereignissen und einer zeitlichen Wirkung in Bezug auf ein oder mehrere einzelne Vorkommnisse angibt.

6. System nach Anspruch 1, wobei die Alarmmittel aus sichtbaren Alarmmitteln, hörbaren Alarmmitteln oder einer Kombination davon ausgewählt sind.

7. System nach Anspruch 6, wobei die sichtbaren Alarmmittel eine lichtemittierende Diode sind und die hörbaren Alarmmittel ein Summer sind.

8. System nach Anspruch 6, wobei die Form und Art des Alarms aus verschiedenen Alarmstufen ausgewählt werden können.

9. System nach Anspruch 1, wobei die erste Gleichstromversorgungs-Überwachungseinheit (112) auf einer gedruckten Leiterplatte positioniert ist, die von der computerisierten Umgebung (111) der computerisierten Vorrichtung separat und nicht damit verbunden ist, und wobei die separate gedruckte Leiterplatte einen Anschluss zum Kommunizieren von Eingabe- und Ausgabedaten an die und von der erste/n Gleichstromversorgungs-Überwachungseinheit (112) aufweist.

10. System nach Anspruch 9, wobei der Anschluss dazu genutzt wird, die Speicherdatenbank (114) der einen oder mehreren Signaturen zu aktualisieren.

11. System nach Anspruch 9, wobei die Speicherdatenbank (114) auch ein erstes Ereignisprotokoll speichert.

12. System nach Anspruch 11, das ferner umfasst:
a. eine zweite Gleichstromversorgungs-Überwachungseinheit, die innerhalb der computerisierten Umgebung (111) der Vorrichtung simultan zur ersten Gleichstromversorgungs-Überwachungseinheit (112) läuft, die innerhalb der separaten Umgebung (150) läuft, und die dazu ausgestaltet ist, ein zweites Ereignisprotokoll zu erzeugen, das die überwachten zeitlichen Eigenschaften des von der Gleichstromversorgung abgeleiteten Energieverbrauchs angibt, und
b. eine externe Instanz, die das erste Ereignisprotokoll von der separaten computerisierten Umgebung und das zweite Ereignisprotokoll von der computerisierten Umgebung der Vorrichtung extrahiert und die das erste und das zweite Ereignisprotokoll vergleicht, um eine Diskrepanz von erkannten bösartigen Ereignissen zu erkennen, die eine bösartige Manipulation der zweiten Gleichstromversorgung-Überwachungseinheit widerspiegelt.

13. System nach Anspruch 1, wobei die Gleichstromversorgung (113) extern zu der computerisierten Umgebung (111) der computerisierten Vorrichtung und der separaten computerisierten Umgebung (150) ist und parallel Gleichstromspannung darin einspeist.

## Revendications

1. Système (100) pour protéger un dispositif informatisé contre une activité malveillante résultant d'un code malveillant, comprenant :
a. un environnement informatisé (111) dudit dispositif informatisé ayant des ressources matérielles et logicielles qui est accessible à un réseau de données ;
b. un environnement informatisé séparé (150) configuré avec des ressources matérielles et logicielles qui sont totalement séparées et isolées de l'environnement informatisé dudit dispositif informatisé en termes de séparation physique matérielle et en termes de séparation logicielle ;
c. une alimentation en courant continu, CC (113), pour mettre sous tension l'environnement informatisé dudit dispositif informatisé ;
d. une première unité de surveillance d'alimentation CC (112) à microprocesseur qui est située au sein dudit environnement informatisé séparé, dans lequel ladite première unité de surveillance d'alimentation CC est physiquement connectée à ladite alimentation CC et est configurée pour surveiller une consommation électrique issue de ladite alimentation CC ; et
e. une base de données de mémoire (114) dans laquelle sont stockées une ou plusieurs signatures d'événements malveillants connus, chacune desdites signatures décrit l'effet temporel de l'un desdits événements malveillants connus sur la consommation électrique issue de l'alimentation CC du dispositif,
dans lequel ladite première unité de surveillance d'alimentation CC comprend un moyen d'alerte conçu pour générer un signal d'alerte fourni à un utilisateur lors de la détection d'une concordance entre des caractéristiques temporelles surveillées de la consommation électrique issue de ladite alimentation CC et une ou plusieurs signatures parmi les signatures d'événements malveillants stockées dans ladite base de données.

2. Système selon la revendication 1, dans lequel ledit microprocesseur est utilisable pour surveiller la consommation électrique par un échantillonnage de la consommation de courant issue de ladite alimentation CC (113).

3. Système selon la revendication 1, dans lequel ledit dispositif informatisé est un dispositif mobile, et dans lequel ladite alimentation CC (113) est une batterie du dispositif.

4. Système selon la revendication 1, dans lequel ledit dispositif informatisé est un dispositif stationnaire, et dans lequel ladite alimentation CC (113) est l'alimentation électrique du dispositif.

5. Système selon la revendication 1, dans lequel chacune des signatures stockées est indicative d'une combinaison de l'effet temporel se rapportant à l'un desdits événements malveillants connus et d'un effet temporel se rapportant à un ou plusieurs incidents parmi des incidents individuels.

6. Système selon la revendication 1, dans lequel ledit moyen d'alerte est sélectionné parmi un moyen d'alerte visuelle, un moyen d'alerte audible ou une combinaison de ceux-ci.

7. Système selon la revendication 6, dans lequel ledit moyen d'alerte visuelle est une diode électroluminescente, et ledit moyen d'alerte audible est un bruiteur.

8. Système selon la revendication 6, dans lequel la forme et la manière de l'alerte peuvent être sélectionnées parmi de nombreux niveaux d'alertes.

9. Système selon la revendication 1, dans lequel ladite première unité de surveillance d'alimentation CC (112) est positionnée sur une carte de circuit imprimée séparée de, et non connectée à, l'environnement informatisé (111) du dispositif informatisé, et dans lequel ladite carte imprimée séparée possède un port pour communiquer des données d'entrée et de sortie vers et à partir de la première unité de surveillance d'alimentation CC (112).

10. Système selon la revendication 9, dans lequel ledit port est utilisé pour mettre à jour ladite base de données de mémoire (114) d'une ou plusieurs signatures.

11. Système selon la revendication 9, dans lequel ladite base de données de mémoire (114) stocke également un premier journal d'événements.

12. Système selon la revendication 11, qui comprend en outre :
a. une seconde unité de surveillance d'alimentation CC qui fonctionne au sein dudit environnement informatisé (111) du dispositif simultanément avec ladite première unité de surveillance d'alimentation CC (112) qui fonctionne au sein dudit environnement séparé (150), et est configurée pour générer un second journal d'événements qui est indicatif des caractéristiques temporelles surveillées de la consommation électrique dérivée de ladite alimentation CC ; et
b. une entité externe qui extrait ledit premier journal d'événements à partir de l'environnement informatisé séparé et ledit second journal d'événements à partir de l'environnement informatisé du dispositif, et qui compare lesdits premier et second journaux d'événements pour détecter une discordance d'événements malveillants détectés qui reflète une manipulation malveillante de ladite seconde unité de surveillance d'alimentation CC.

13. Système selon la revendication 1, dans lequel l'alimentation CC (113) est externe à, et alimente en parallèle avec une tension CC, l'environnement informatisé (111) dudit dispositif informatisé et ledit environnement informatisé séparé (150).
